# FASCICULE DE BREVET EUROPEEN

(11) **EP 0 987 782 B1**
(45) Date de publication et mention de la délivrance du brevet: **26.01.2011**
(21) Numéro de dépôt: 99420193.7
(22) Date de dépôt: 13.09.1999
(51) Int. Cl.: H01M 10/052

(54) **Procédé de découpe de générateurs électrochimiques multicouches à électrolyte polymère et générateurs ainsi obtenus**
Verfahren zum Schneiden von mehrschichtigen elektrochemischen Generatoren mit Polymerelektrolyt und so erhaltenen Generatoren
Cutting process of multilayered electrochemical generators comprising polymer electrolyte and generators formed thereby

(30) Priorité: 14.09.1998 US 152341
(43) Date de publication de la demande: 22.03.2000
(73) Titulaire: Bathium Canada Inc., Boucherville, QC J4B 7Z7 (CA); MINNESOTA MINING AND MANUFACTURING COMPANY, Saint Paul, Minnesota 55133-3427 (US)
(72) Inventeur: Gauthier, Michel, La Prairie, Québec, J5R 1E6 (CA); Lessard, Ginette, Longueuil, Québec, J4M 1V5 (CA); Dussault, Gaston, St-Benoît-de-Mirabel, Québec, J0N 1K0 (CA); Rouillard, Roger, Beloeil, Québec, J3G 2C9 (CA); Simoneau, Martin, Montréal, Québec, H2J 1K3 (CA); Miller, Alan Paul, Minnesota, Washington Country 55125 (US)
(74) Mandataire: Guerre, Dominique

(56) Documents cités:
- EP-A- 0 875 952
- US-A- 5 350 645
- US-A- 5 360 684

## Description

La présente invention concerne un procédé de découpe par abrasion, avec des moyens mécaniques, de générateurs électrochimiques multicouches à électrolyte polymère, dont l'anode est de préférence à base de lithium métallique ou de ses composés ou alliages. L'invention se rapporte également à certains designs de cellules multicouches et à l'état solide, réalisées selon le procédé de découpe de l'invention.

La mise en oeuvre d'accumulateurs ou de piles à électrolyte polymère en films minces entraîne la production de designs de cellules multicouches et implique le développement d'une surface qui puisse atteindre les capacités en puissance et en énergie requises par les utilisateurs. De façon générale, ces générateurs sont obtenus en enroulant ou en empilant en continu ou en discontinu des surfaces importantes des films juxtaposés d'anode, d'électrolyte, de cathode, de collecteur et au besoin d'isolants électriques. On se référera par exemple au brevet U.S. 5.100.746 du 31 mars 1992.

D'autre part, on sait que les piles laminées minces au lithium à électrolyte polymère ont la propriété, lorsque découpées par des moyens mécaniques, de se cicatriser par dissolution locale du lithium. Toutefois, lorsque les piles au lithium à électrolyte polymère se présentent sous forme d'assemblages multicouches de piles laminées minces, obtenus soit par enroulement de piles laminées minces ou par empilement en parallèle ou bipolaire de piles laminées minces dont au moins un collecteur rigide métallique est présent dans la pile laminée mince, il est presque impossible d'effectuer une découpe mécanique sur un tel assemblage si celui-ci est constitué de plus d'une couche de pile laminée mince. En effet, en présence des nombreuses couches métalliques comme les films de lithium et les collecteurs de courant pour les films de cathode, la découpe mécanique génère des contraintes locales et des déformations mécaniques dues à la pression locale causant des courts-circuits permanents dans la pile.

Il a été montré dans le brevet U.S. 5.250.784 qu'il était possible de fabriquer des petites cellules individuelles par découpe au laser De plus, dans les demandes de brevet déposées au Canada par la demanderesse les 23 et 28 avril 1997 sous les numéro 2,203,490 et 2,203,869 respectivement, on a montré qu'il est même possible de découper une seule couche de pile laminée par simple découpe mécanique. La découpe par laser, qui vaporise les matériaux sans créer de déformations mécaniques, peut générer quant à elle des résidus parfois conducteurs, notamment des dépôts carbonisés, pouvant causer des courts-circuits. La technique de découpe par laser est donc difficilement applicable pour des piles multicouches parallèles ou bipolaires. Quant à la découpe mécanique d'une seule couche, elle est difficilement applicable à une pile multicouche en raison des déformations mécaniques cumulatives générées localement lors de la découpe, résultant naturellement en la production de courts-circuits ou des points faibles provoquants des courts-circuits lors des cycles successifs de charge/décharge.

Une façon avantageuse de réaliser un générateur multicouche consiste souvent à enrouler ou à empiler les éléments en parallèle en laissant les collecteurs respectifs de l'anode et de la cathode déborder sur une arête latérale différente, de façon à faciliter lacollection de l'ensemble de la surface des électrodes par des prises de contact latérales. On fait référence ici au brevet U.S. 5.415.954 du 16 mai 1995.

D'autre part, un design particulièrement recherché de pile parce qu'il combine la facilité de mise en oeuvre et la compacité volumique est l'enroulement à plat, bien connu de l'homme de l'art. Les inconvénients associés à ce design sont notamment la présence des zones de courbure où, localement, les surfaces et les densités de courant sont inégales et où la pression résultant des variations de volume de l'ensemble ne peut être compensée, ce qui entraîne inévitablement des stress locaux lors des cycles successifs de charge/décharge. De façon très générale, la présence de ces zones non homogènes crée des zones de faiblesse dans le champ électrique au sein du générateur, ce qui entraîne un vieillissement accéléré. Une façon élégante de résoudre ce genre de problème serait de pouvoir découper après assemblage, ces zones de courbure de façon à produire un ensemble multicouche totalement homogène sur toute sa surface, mais comme on l'a vu plus haut les procédés disponibles ne peuvent produire les résultats désirés sans désavantages sérieux.

Le brevet US 5,350,645 décrit un procédé d'assemblage et de découpe de cellules électrochimiques dans lequel les anodes et les cathodes sont découpées individuellement avant l'assemblage des cellules. Les anodes et les cathodes sont ensuite assemblées avec les couches d'électrolytes de façon à laisser des espaces entre les anodes adjacentes et les cathodes adjacentes et l'assemblage est découpé à travers les espaces compris entre les anodes et cathodes adjacentes pour former des cellules électrochimiques.

L'invention a donc pour objet la mise au point d'une façon élégante de résoudre le genre de problèmes discutés ci-dessus, tout en optimisant les designs et les performances des générateurs électrochimiques.

L'invention a pour autre objet un procédé permettant de découper après assemblage d'un enroulement à plat, les zones de courbure de façon à produire un ensemble multicouche totalement homogène sur toute sa surface.

L'invention a aussi pour objet d'obtenir des piles de plus petites dimensions par découpe d'une pile multicouche de plus grande dimension, en recourant à la découpe à vif par des moyens mécaniques abrasifs localisés, tel que la découpe par jet d'eau additionné d'un agent abrasif, ou la découpe par jet d'huile additionnée d'un agent abrasif, ou la découpe par fil diamanté, et cela sans exercer de pression sur les collecteurs métalliques ni de déformations mécaniques suffisantes pour générer des courts-circuits ou des points faibles.

Un autre objet de l'invention réside en la démonstration que les opérations de découpe mécanique, notamment, mais sans en limiter la portée, la découpe par cisaillement, par découpe transversale ou par emporte-pièce sont possibles dans certaines conditions et qu'il est possible de produire des générateurs plus compacts et plus performants en cyclage grâce à un contrôle adéquat de la consolidation mécanique de la pile multicouche et des conditions de découpe.

Un autre objet de l'invention est de prévoir une étape de consolidation mécanique de l'ensemble multicouche, rendant les films solidaires entre eux et l'ensemble relativement étanche, ce qui permet l'usage d'un liquide réactif tel que l'eau.

Un autre objet de l'invention, est la mise au point d'un procédé de découpe au jet d'eau, technique jugée jusqu'à présent totalement incompatible avec un dispositif constitué de films minces comportant en outre une anode de lithium.

Un autre objet de l'invention est la réalisation de designs de générateurs multicouches particulièrement avantageux par rapport à l'art antérieur, tant par leurs performances que par leur facilité de mise en oeuvre.

L'invention concerne un procédé de fabrication d'un générateur électrochimique tout solide au lithium ou au sodium, comprenant les étapes suivantes :
a) on prépare un empilement de pile laminée, chacune constituée de films d'anode, d'électrolyte polymère, de cathode, de collecteur et éventuellement d'un film isolant, et
b) on découpe l'assemblage obtenu en (a) sous forme prédéterminée en utilisant des moyens mécaniques,
**caractérisé en ce que** l'empilement de pile est préparé dans des conditions permettant de constituer un ensemble monobloc rigide substantiellement étanche, dans lequel les films sont tous adhérents entre eux, et l'opération de découpe mécanique s'effectue sans déformation macroscopique des films constituant l'ensemble et sans induire de courts-circuits permanents ni des points faibles.

Dans la présente description et dans les revendications annexées, le terme "déformation macroscopique" signifie une déformation visible à l'oeil nu. En d'autres termes, si une déformation minuscule se manifestait et que cette dernière n'était pas visible à l'oeil nu, selon l'invention, cela signifierait qu'il n'y a pas de déformation macroscopique du film.

Selon une réalisation préférée, la découpe peut s'effectuer par des moyens mécaniques sans déformation macroscopique au sein de l'ensemble pile multicouche. Comme exemples de moyens mécaniques on peut mentionner sans en limiter la portée, la découpe transversale, par cisaillement et à l'emporte-pièce. Les lames utilisées peuvent être métalliques ou en céramique.

Selon une réalisation préférée, la découpe peut s'effectuer au moyen d'un jet d'un fluide, réactif ou non et comportant au besoin un abrasif solide dispersé dans le fluide. À titre d'abrasifs, on peut mentionner sans être limitatif, le sable de silice, la poudre de diamant, un abrasif de type Grit 80^{™} de Barton Garnet, et autres bien connus de l'homme de l'art.

Selon une réalisation préférée, on effectue la découpe au moyen d'un fil abrasif mobile capable d'assurer une découpe sans produire de déformation mécanique et de court-circuit. Ce fil abrasif peut être un fil diamanté, et le fil lui-même est normalement en acier.

Selon une réalisation préférée, l'anode constituant chacune des piles est en lithium ou un composé ou alliage à base de lithium et doit être capable de s'oxyder de façon à former un film isolant électriquement ou de se dissoudre chimiquement lorsque mis en présence de la cathode suite à un court-circuit accidentel induit par la découpe.

Selon l'invention, on peut traiter l'empilement de piles laminées pour en faire un ensemble monobloc rigide suffisamment étanche pour prévenir la pénétration de fluide entre les couches de l'ensemble monobloc. Cela permet, selon l'invention, d'introduire pendant la découpe, un fluide réactif, notamment l'eau, l'alcool, des composés halogénés, ou des composés contenant du soufre ou de l'oxygène, qui peuvent oxyder le lithium et possiblement dissoudre une partie du lithium de façon à empêcher la formation de courts-circuits entre l'extrémité des films d'anode et des films conducteurs de la cathode.

Selon une autre réalisation, on prépare d'abord un générateur multicouche constitué de la succession des films suivants: ...anode, électrolyte, cathode, collecteur, cathode, électrolyte, anode..., et on s'assure que ces films sont tous adhérents les uns aux autres ou rendus adhérents, notamment par une opération de pressage à chaud après assemblage, ou en utilisant un électrolyte partiellement réticulé, ou en utilisant des additifs d'adhésion réticulables ou non. De la même façon, on pourrait aussi préparer un empilement de piles de façon à obtenir un générateur multicouche constitué de la succession des films suivants ...anode, électrolyte, cathode, collecteur, isolant, anode... On pourrait aussi préparer un générateur multicouche constitué de la succession des films suivants ... collecteur, anode, électrolyte, cathode, collecteur...

Selon une autre réalisation, on prépare une pile élémentaire comprenant des films d'anode, d'électrolyte polymère, de cathode, de collecteur et éventuellement d'un film isolant, on enroule à plat le laminé de la pile élémentaire en laissant déborder latéralement les collecteurs de l'anode et de la cathode, et l'on découpe au moins les zones de courbure aux extrémités de l'enroulement selon l'étape (b).

Selon une autre réalisation, on découpe longitudinalement au centre d'un assemblage symétrique de façon a réduire les pertes dues à l'imprécision du positionnement des films et à l'application éventuelle des bandelettes isolantes pour éviter d'éventuels courts-circuits latéraux, tel que décrit dans le brevet U.S. 5.360.684 du 1er novembre 1994 de la demanderesse.

Selon une autre réalisation, on dissout ou enlève mécaniquement une partie du lithium oxydé de façon à dégager l'extrémité latérale des feuillards de la cathode.

Selon une autre réalisation, on pulvérise du métal sur la ou les faces où le collecteur est accessible, pour assurer la prise de contact latérale entre les feuillards du collecteur de la cathode.

L'invention concerne aussi une cellule électrochimique comprenant un ensemble multicouche monobloc dont les composantes comprennent des films d'anode, d'électrolyte polymère, de cathode, de collecteur et éventuellement de films isolants, ces films étant laminés et solidaires, adhérents entre eux et relativement étanches, cet ensemble comportant au moins une extrémité en forme de découpe uniforme, les divers films constituant l'ensemble n'ayant subi aucune déformation macroscopique, l'extrémité des films d'anode pouvant comporter un film de passivation isolant électriquement.

D'autres caractéristiques et avantages de la présente invention ressortiront d'ailleurs de la description qui suit de réalisations préférées données à titre purement illustratif et sans caractère limitatif, dans lesquels
la figure 1 est une vue schématique d'une pile laminée-mère destinée à l'assemblage d'une pile multicouche;
la figure 2 est une vue en perspective d'un enroulement multicouche à plat à partir de la pile laminée-mère illustrée en figure 1;
la figure 3 illustre en perspective, la découpe des zones de courbure aux extrémités de l'enroulement multicouche à plat de la figure 2 et obtention d'un assemblage prismatique;
la figure 4 est une vue en perspective d'un enroulement à plat avec découpes des zones de courbure et autres découpes transversales;
la figure 5 est une vue en perspective d'un empilement multicouche bipolaire;
la figure 6 est une vue en perspective de découpes de formes diverses, obtenues à partir de l'empilement multicouche bipolaire illustré en figure 5;
la figure 7 est une vue similaire à la figure 3, montrant des découpes longitudinales;
la figure 8 est une vue schématique en perspective illustrant l'opération de découpe par un jet d'eau ou d'huile;
la figure 9 est une vue schématique en perspective illustrant la découpe d'une pile multicouche avec fil abrasif;
la figure 9a est une vue schématique illustrant la découpe d'une pile multicouche avec un dispositif à découpe transversale,
la figure 10 est une vue en coupe d'une pile multicouche de la figure 7 avant découpe longitudinale;
la figure 11 est une vue en coupe d'une pile multicouche de la figure 10 après découpe au centre;
la figure 12 est une vue similaire à la figure 11 une fois le lithium oxydé;
la figure 13 est une vue similaire à la figure 12 montrant le collecteur de courant dégagé pour une prise de contact;
la figure 14 compare les courbes de charge/décharge d'une pile multicouche selon l'invention après découpe au jet d'eau additionnée d'abrasif avec celles d'une pile équivalente non découpée;
la figure 15 est une courbe de charge/décharge d'une pile multicouche selon l'invention après découpe au fil diamanté sans lubrifiant;
la figure 16 est une courbe de charge/décharge d'une pile multicouche selon l'invention après découpe au fil diamanté avec lubrifiant; et
la figure 17 est une courbe de charge/décharge d'une pile multicouche selon l'invention après découpe au moyen d'un dispositif de découpe transversale.

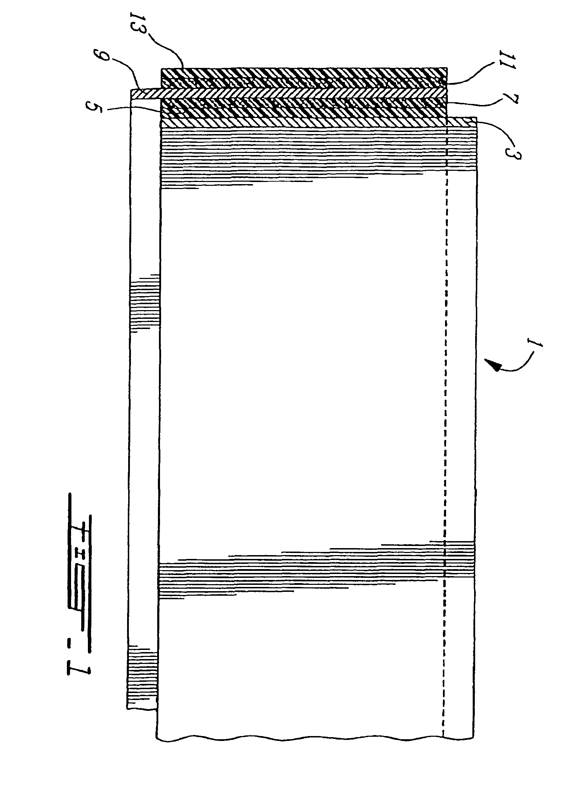

En se référant aux dessins, on verra une façon avantageuse de réaliser un type de générateur multicouche selon l'invention, à partir d'une pile laminée mère 1 (figure 1) constituée des couches suivantes: un feuillard de lithium 3 constituant l'anode, une première couche d'électrolyte polymère 5 et une première couche de cathode 7 ainsi que son collecteur d'aluminium 9; une seconde couche de cathode 11 et finalement une seconde couche d'électrolyte 13. On retrouvera les détails concernant cet arrangement de film dans le brevet U.S. 5.360.684

Cette procédure consiste à enrouler ou à empiler les éléments en parallèle en laissant le collecteur de la cathode et l'anode de lithium déborder sur une arête latérale différente de façon à faciliter la collection de l'ensemble de la surface des électrodes par une prise de contact latérale sur les feuillards superposés de l'anode d'un coté et du collecteur de la cathode de l'autre coté.

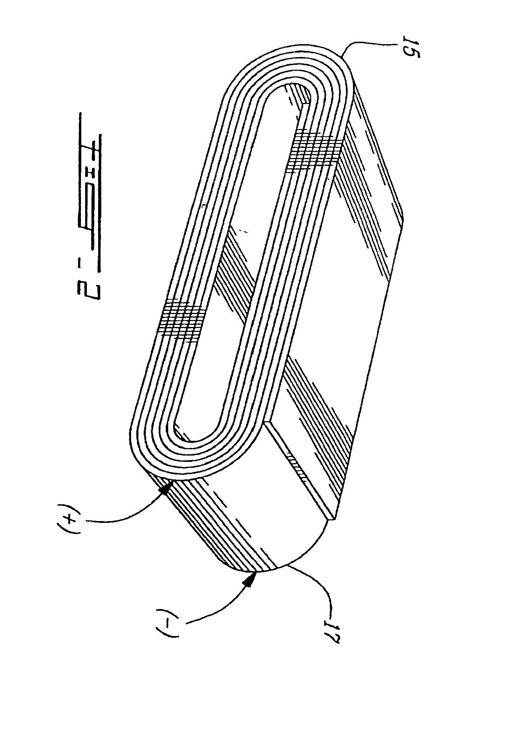

Un design particulièrement intéressant parce qu'il combine la facilité de mise en oeuvre et la compacité volumique est l'enroulement à plat illustré de façon schématique en figure 2.

Cependant, comme mentionné ci-dessus, ce design est associé à des inconvénients notamment la présence de zones de courbure 15 et 17 où, localement les surfaces et les densités de courants sont inégales et la pression résultant des variations de volume ne peut être compensée.

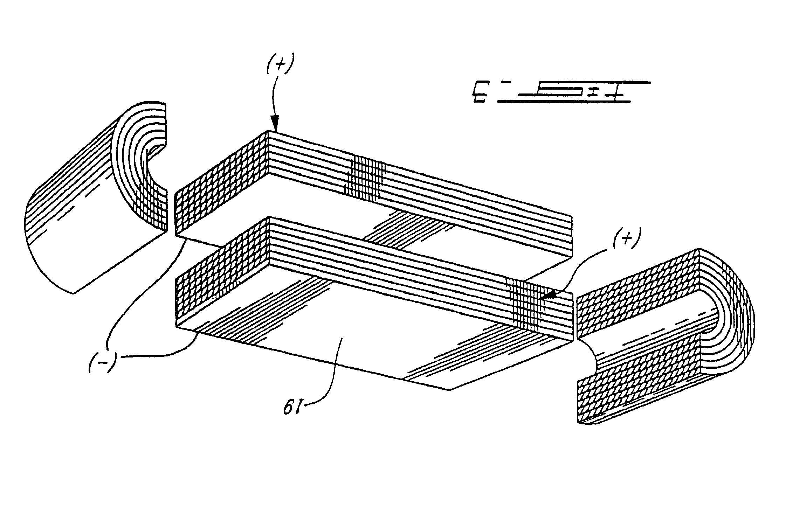

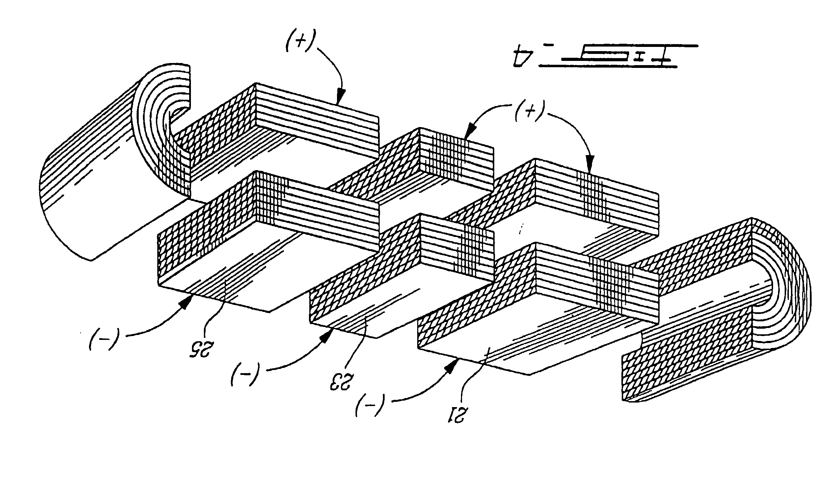

Un mode de réalisation de invention est illustré aux figures 3 et 4 à titre indicatif et de façon nullement limitative. Un générateur assemblé en parallèle par enroulement d'une pile laminée mère 1 comme illustrée en figure 2 comporte sur ses faces avant et arrière des zones de débordement des collecteurs (non illustrés) de la cathode et de anode, respectivement. L'opération de découpe qu'on discutera plus loin est localisée aux deux extrémités de l'enroulement et permet de produire un assemblage prismatique 19 (figure 3) comportant deux tranches de collection de courant de la cathode et de l'anode, ou plusieurs prismatiques 21, 23 et 25 par découpes multiples (figure 4).

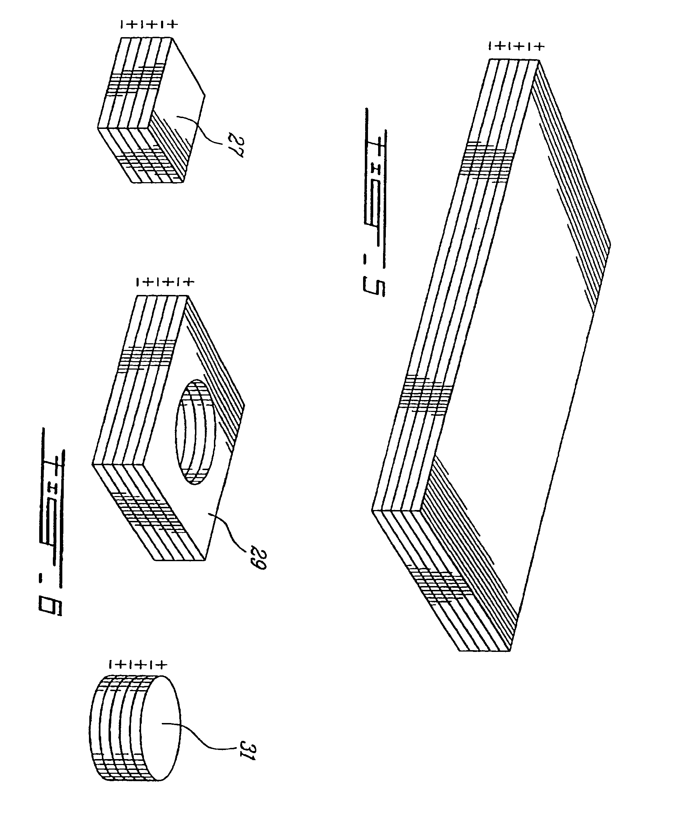

Un mode de réalisation de l'invention est illustré aux figures 5 et 6. On prépare d'abord un générateur bipolaire multicouche par empilement successif des films suivants ...collecteur, lithium, électrolyte, cathode, collecteur...comme illustré en figure 5. Ce générateur comporte sur ses faces inférieure et supérieure des collecteurs pour la collection du courant. L'opération de découpe permet de produire des découpes de formes multiples 27, 29, et 31 (figure 6), les prises de contact se faisant par les faces inférieures et supérieures des piles découpées.

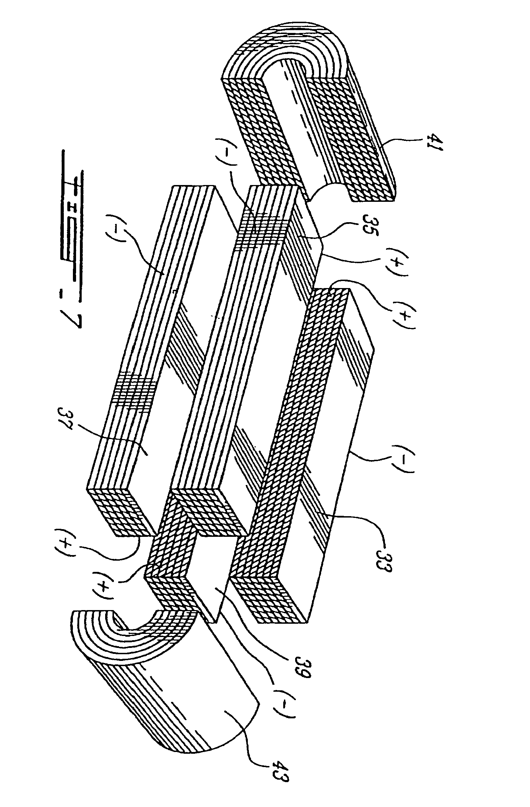

Un autre mode de réalisation est illustré en figure 7. On notera les découpes longitudinales permettant de produire les morceaux 33, 35, 37, et 39 en plus de l'élimination des zones de courbure 41 et 43 par des découpes transversales.

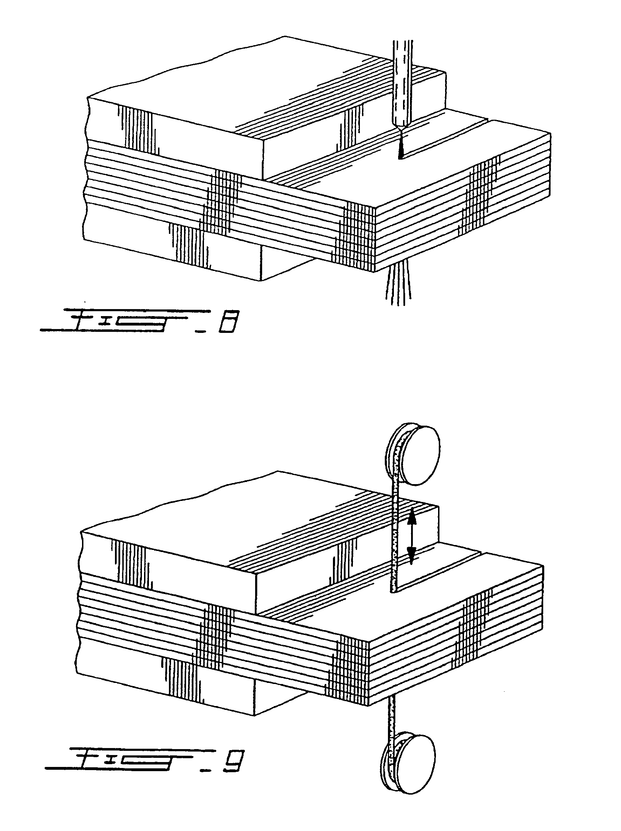

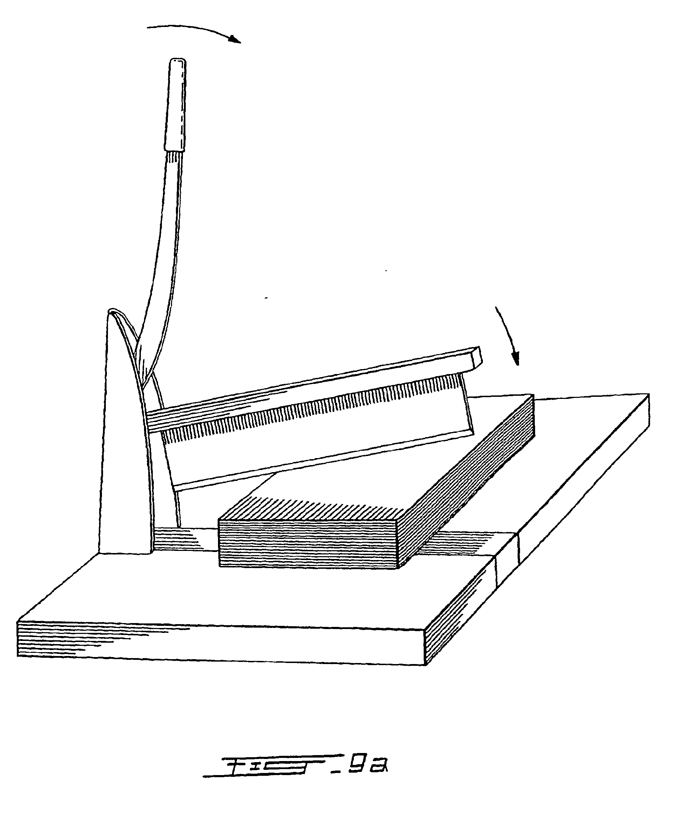

Un premier moyen d'effectuer la découpe selon l'invention est illustré de façon schématique en figure 8. On verra qu'il s'agit d'un jet de liquide bien connu de l'homme de l'art. Dans le cas illustré, il s'agit d'un jet d'huile comportant un abrasif solide, notamment des particules de Grit 80, dispersé dans l'huile. On pourrait tout aussi bien utiliser un jet d'eau comportant un abrasif à base de sable de silice ou un jet de tout autre fluide réactif ou non, par exemple l'alcool, des composés halogénés ou soufrés ou oxygénés. On pourrait aussi utiliser un moyen mécanique illustré de façon schématique en figure 9 avec ou sans lubrifiant ou liquide réactif. Il s'agit ici d'un fil diamanté encore une fois bien connu de l'homme de l'art. Un autre moyen mécanique pour l'opération de découpe, pourrait être un dispositif à découpe transversale tel qu'illustré en figure 9a. On comprendra évidemment que tout autre moyen connu de l'homme de l'art constituant une abrasion localisée et pouvant produire une coupe ou plusieurs coupes simultanées sans déformation macroscopique de l'ensemble pile multicouche peut aussi être utilisé sans pour cela sortir du cadre de la présente invention.

Avec l'ensemble multicouche étanche de la figure 8 constitué entièrement de films qui adhèrent entre eux de façon à former un bloc dense mécaniquement fort, le procédé de découpe selon l'invention est essentiel pour prévenir des courts-circuits ou des cycles à longue vie. A ce sujet, il est entendu que l'adhérence des films entre eux peut résulter de la nature des divers films utilisés, ou encore on peut obtenir ce résultat par pressage à chaud du laminé après assemblage de ce dernier. On pourrait encore utiliser des agents d'adhérence bien connus de l'homme de l'art, tels que des thermoadhésifs réticulables ou non.

La présence d'une anode à base de lithium est particulièrement avantageuse pour la mise en oeuvre de l'invention, car le lithium tend à réagir chimiquement avec la cathode si un court-circuit accidentel est généré lors de la découpe ou advenant le cas avec le fluide de découpe. La réaction chimique du lithium de la zone fraîchement coupée peut en outre être utilisée avec avantage parce que le lithium exposé s'oxyde facilement et se transforme en un isolant électrique tel que Li₂O ou LiOH. Ce phénomène, combiné au fait que l'ensemble multicouche se transforme en un bloc mécaniquement dense pénétré seulement en surface par une phase fluide, permet l'utilisation inattendue d'un fluide réactif.

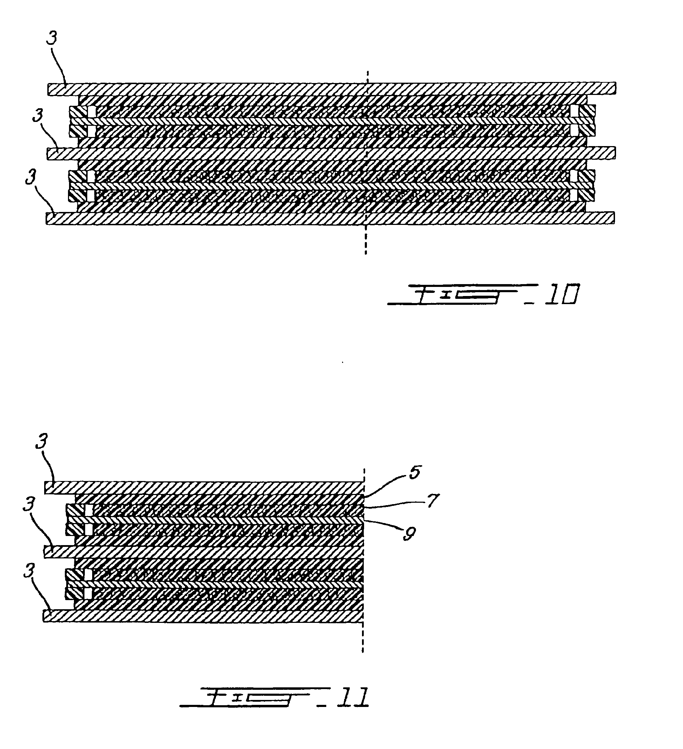

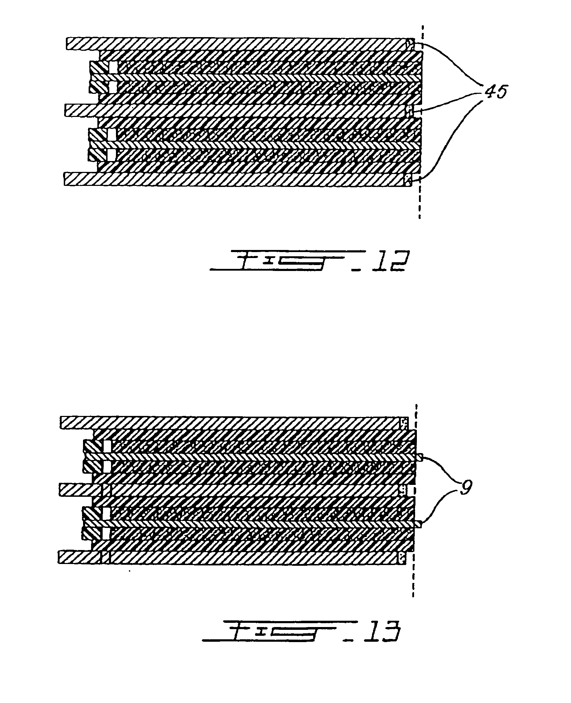

Les figures 10, 11, 12 et 13 illustrent comment on peut mettre à profit le procédé de découpe et la réaction d'oxydation simultanée ou ultérieure du lithium exposé pour réaliser des designs où la zone de collection des extrémités des feuillards du collecteur de la cathode peut s'étendre sur plus d'une arête de façon à optimiser les échanges thermiques et électriques. La figure 10 est une vue en coupe de la pile multicouche de la figure 7 avant découpe longitudinale. La figure 11 est une vue en coupe de la pile multicouche de la figure 10 après découpe longitudinale. La figure 12 est une vue similaire à la figure 11 mais après oxydation du lithium en 45. La figure 13 est une vue similaire à la figure 12 mais après dégagement des collecteurs de courant 9 par découpe des matériaux mous environnants.

Un avantage résultant du procédé de invention est de permettre de réduire au minimum les zones inactives sur le plan électrochimique, notamment par l'élimination des zones de courbures de l'enroulement: moins compactes sur le plan volumique. De la même façon, on réduit l'importance des zones latérales de débordement aux extrémités des feuillards de l'anode et de la cathode qui sont pénalisantes sur le plan volumique, compte tenu du besoin d'incorporer une bandelette d'isolation et la marge d'erreur résultant du positionnement approximatif des films les uns par rapport aux autres. On se référera particulièrement au brevet U.S. 5.360.684 de la demanderesse.

Il va de soi que les façons de réaliser les assemblages multicouches ne sont pas limitantes, divers procédés ou séquences de matériaux pouvant conduire au procédé de découpe de l'invention, incluant à titre d'exemples des assemblages série ou parallèle.

D'autres moyens de découpe utilisant l'abrasion mécanique avec ou sans additifs chimiques sont bien entendu possibles ainsi qu'une infinité de fluides organiques ou minéraux, par exemple l'azote liquide, l'argon liquide, l'alcool, des composés halogénés ou soufrés ou oxygénés. Ces derniers peuvent dans certains cas être utilisés en outre durant ou après la découpe pour dissoudre et/ou oxyder une partie du lithium exposé de façon à isoler électriquement l'extrémité des feuillards de l'anode des autres composantes des feuillards de la cathode.

Il va de soi que l'homme de l'art pourra tirer profit des caractéristiques de l'invention pour découper des cellules multicouches dans des formes variées, incluant au besoin des trous à l'intérieur des ensembles ou des formes propres aux diverses applications.

L'invention va maintenant être illustrée par les exemples qui suivent données évidemment sans caractère limitatif. Les compositions de polymère et d'électrode utilisées dans les exemples qui suivent ont été décrites dans plusieurs brevets antérieurs notamment dans le brevet U.S. 4.578.326.

### Exemple 1

À partir d'un laminé mince tel qu'illustré en figure 1, on assemble par enroulement à plat 1 pile biface de format 135 mm X 150 mm avec une épaisseur de 5 mm. Le laminé mince est constitué d'un film d'anode de lithium de 54 µm, de 2 films de cathode de 40 µm, de 2 films d'électrolyte polymère de 15 µm et d'un collecteur central en aluminium de 15 µm. Le laminé présente des débordements latéraux permettant la prise de contact en parallèle des multicouches successives. Les cathodes sont à base d'oxyde de vanadium et d'électrolyte polymère. La pile est ensuite retirée de son mandrin de bobinage et pressée dans une presse sous vide à 80°C pour permettre l'adhésion homogène des électrolytes aux matériaux d'anode et de cathode. La pile est ensuite découpée transversalement par jet d'eau de façon à éliminer les zones de courbure et à conserver la possibilité d'effectuer les prises de contact par les débordements latéraux. (figure 3).

L'eau sous pression de 40 000 psi contenait un additif abrasif de type sable de silice. La vitesse de découpe était de 10 cm/min. Le jet d'eau formait un angle de 90 degrés avec la surface de la pile (figure 8). Durant la découpe, on observe des courts-circuits temporaires dus à la présence d'eau. On mesure une baisse de voltage de la pile d'environ 50 mV. La pile est ensuite emballée et mise en cyclage pour l'évaluation de ses performances électrochimiques.

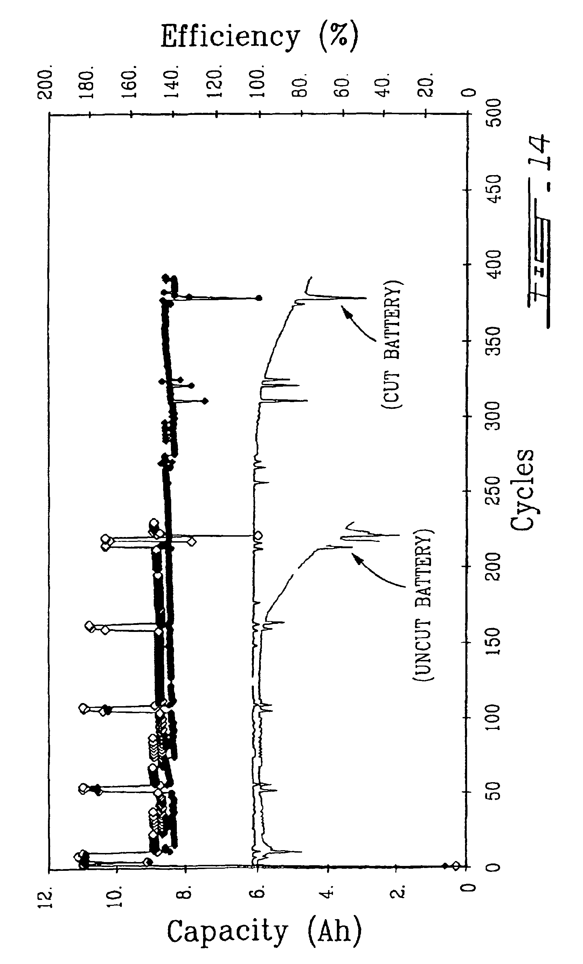

La pile de 11 ampères heure (Ah) est déchargée pendant trois heures à 80% de son contenu énergétique selon un profil de type DST (dynamic stress testing développé par United States Advanced Batteries Consortium pour simuler l'application à un véhicule électrique) et rechargée en 10 heures jusqu'à 3V. Les résultats électrochimiques obtenus à partir de cette pile découpée par jet d'eau ont été comparés à ceux obtenus pour des piles semblables non découpées. La pile découpée a fait au-delà de 400 cycles de charge et de décharge, tandis que la pile non découpée équivalente a fait seulement 230 cycles de charge et de décharge dans les mêmes conditions de cyclage (figure 14).

### Exemple 2

À partir d'un laminé mince tel qu'illustré en figure 1, on assemble par enroulement à plat une pile biface de format 135 mm X 150 mm avec une épaisseur de 5,5 mm. Le laminé mince est constitué d'un film d'anode de lithium de 54 µm, de 2 films de cathode de 45 µm, de 2 films d'électrolyte polymère de 25 µm et d'un collecteur central en aluminium de 15 µm. Le laminé présente des débordements latéraux permettant la prise de contact en parallèle des multicouches successives. Les cathodes sont à base d'oxyde de vanadium et d'électrolyte polymère. La pile est ensuite retirée de son mandrin de bobinage et pressée comme dans l'exemple 1.

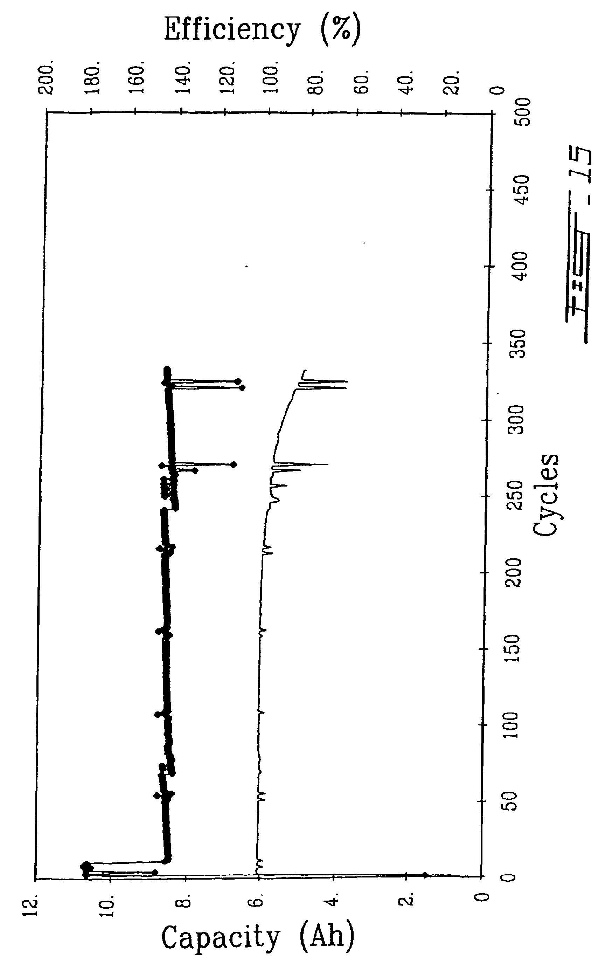

La pile est ensuite découpée transversalement avec l'aide d'un fil diamanté sans lubrifiant (figure 9) de façon à éliminer les zones de courbure et à conserver la possibilité d'effectuer les prises de contact par les débordements latéraux (figure 3). La vitesse de découpe utilisée était de 0,5 cm/min. Durant la découpe, aucun court-circuit n'a été observé. La piles de 1,5 mAh/cm² est déchargée selon le même profil DST que dans l'exemple 1. Les courbes de cyclage montrent au delà de 330 cycles de charge/décharge (figure 15).

### Exemple 3

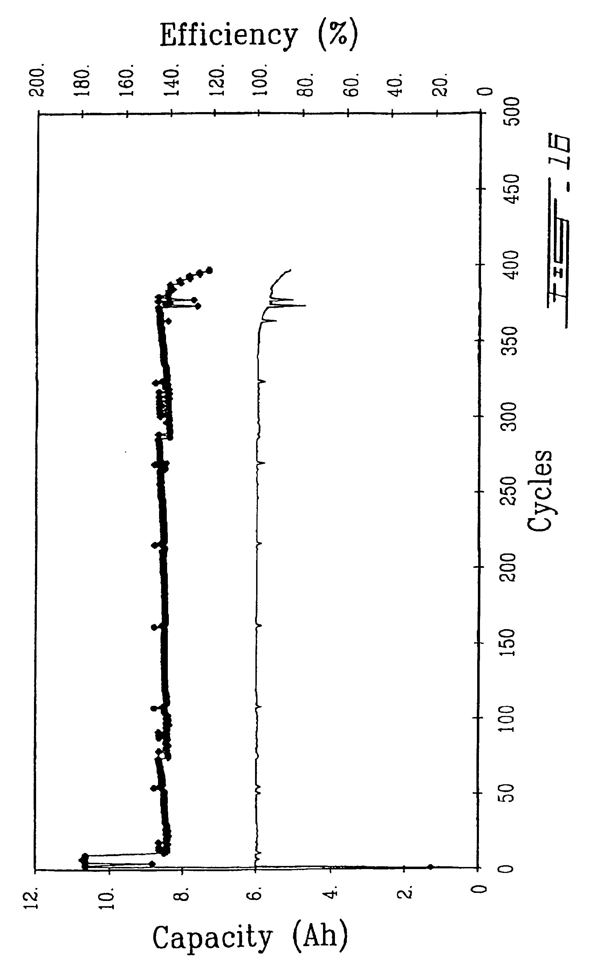

On assemble le même type de pile que dans l'exemple 2. La pile est ensuite découpée transversalement au fil diamanté en présence d'un lubrifiant à base d'huile minérale de façon à éliminer les zones de courbure et à conserver la possibilité d'effectuer les prises de contact par les débordements latéraux. La pile est déchargée selon le même profil DST que les exemples précédents. Les courbes de cyclage sont très semblables à celles obtenues par découpe au fil diamanté sans lubrifiant et montrent plus de 400 cycles de charge/décharge. (Figure 16)

### Exemple 4

On découpe une pile semblable à celle illustrée dans l'exemple 1. La pile est ensuite découpée transversalement par jet d'huile de façon à éliminer les zones de courbure et à conserver la possibilité d'effectuer les prises de contact par les débordements latéraux.

La pression d'huile utilisée est de 45000 psi et l'huile est de type NF de Britol White. L'huile contenait un additif abrasif de type Grit 80 de Barton Garnet. La vitesse de découpe utilisée était de 21 cm/min. Durant la découpe, aucun court-circuit n'a été observé. Les résultats électrochimiques obtenus à partir de la pile découpée au jet d'huile sont semblables à ceux déjà obtenus aux exemples précédents.

### Exemple 5

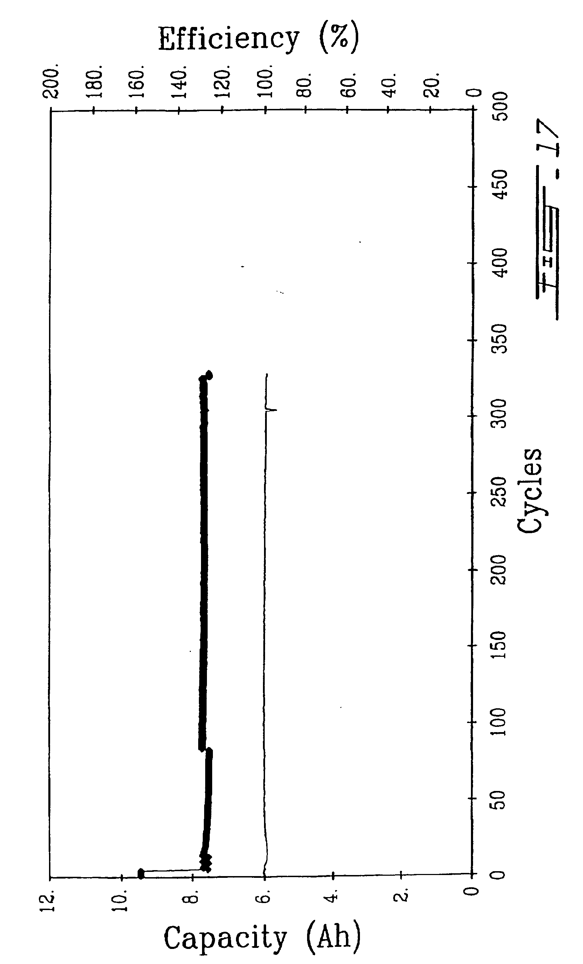

On découpe une pile semblable à celle illustrée dans l'exemple 2 par découpe transversale de façon à éliminer les zones de courbure et à conserver la possibilité d'effectuer les prises de contact par les débordements latéraux. On a utilisé un dispositif à découper le caoutchouc modèle 600 de Superior Manufacturing Corporation comportant une lame en acier à simple biseau. La découpe s'effectue en une seconde ce qui est suffisamment rapide pour empêcher la formation de courts-circuits permanents ou de déformations macroscopiques résultant de pression locale. Dans cet essai, la découpe était suivie d'une application locale de méthanol de façon à cicatriser tout point faible résiduel éventuellement formé dans la zone de découpe. Les courbes de cyclage indiquent un excés de 300 cycles de charge/décharge (figure 17).

## Revendications

1. Procédé de fabrication d'un générateur électrochimique tout solide au lithium comprenant les étapes suivantes:
a) on prépare un empilement de piles laminées, chacune constituée de films d'anode de lithium ou d'alliage de lithium, d'électrolyte polymère, de cathode, de collecteur et éventuellement d'un film isolant, et
b) on découpe l'empilement obtenu en (a) sous forme prédéterminée, en utilisant des moyens mécaniques, **caractérisé en ce que** l'empilement de piles laminées est préparé dans des conditions permettant de constituer un ensemble monobloc rigide et étanche, dans lequel les films sont tous adhérents entre eux, l'opération de découpe de l'empilement s'effectue dans des conditions selon lesquelles on n'exerce aucune déformation macroscopique des films constituant l'ensemble monobloc, susceptible d'induire des courts-circuits permanents ou points faibles, et on introduit un fluide réactif sélectionné parmi l'eau, l'azote liquide, l'argon liquide, l'alcool, et des composés halogénés, soufrés ou oxygénés, capable d'oxyder le lithium, et, de le dissoudre en partie, de façon à éviter tout court-circuit électrique entre l'extrémité des films d'anode et des films conducteurs de la cathode.

2. Procédé selon la revendication 1, **caractérisé en ce que** l'on effectue la découpe en utilisant des moyens mécaniques abrasifs localisés.

3. Procédé selon la revendication 1, **caractérisé en ce que** l'on effectue la découpe au moyen d'un jet d'un fluide, réactif ou non et comportant au besoin un abrasif solide dispersé dans ledit fluide.

4. Procédé selon la revendication 1, **caractérisé en ce que** l'on effectue la découpe au moyen d'un fil abrasif mobile.

5. Procédé selon la revendication 1, **caractérisé en ce que** l'on effectue la découpe par découpe transversale, par cisaillement ou à l'emporte-pièce.

6. Procédé selon l'une des revendications 1, 2, 3, 4 ou 5, **caractérisé en ce que** l'anode est en lithium ou un composé ou alliage à base de lithium capable de s'oxyder de façon à former un film isolant électriquement, ou de se dissoudre chimiquement lorsque mis en présence de la cathode suite à un court-circuit accidentel induit par la découpe.

7. Procédé selon la revendication 6, **caractérisé en ce que** l'on traite ledit empilement de piles laminées de façon à ce que l'ensemble monobloc rigide soit suffisamment étanche pour empêcher la pénétration de fluide entre les couches de l'ensemble monobloc.

8. Procédé selon la revendication 1, **caractérisé en ce que** le fluide réactif est introduit lors de la découpe.

9. Procédé selon la revendication 1, **caractérisé en ce que** le fluide réactif est introduit
à la suite de la découpe.

10. Procédé selon la revendication 1, **caractérisé en ce que** l'on prépare un empilement de façon à obtenir un générateur multicouche, constitué de la succession des films suivants : anode, électrolyte, cathode, collecteur, cathode, électrolyte, anode..., qui sont tous adhérents les uns aux autres ou rendus adhérents.

11. Procédé selon la revendication 10, **caractérisé en ce que** les dits films sont rendus adhérents par une opération de pressage.

12. Procédé selon la revendication 11, **caractérisé en ce que** l'opération de pressage s'effectue à chaud après empilement.

13. Procédé selon la revendication 1, **caractérisé en ce que** l'on prépare un empilement de piles de façon à obtenir un générateur multicouche constitué de la succession des films suivants : ...anode, électrolyte, cathode, collecteur, isolant, anode..., qui sont tous adhérents les uns aux autres ou rendus adhérents.

14. Procédé selon la revendication 13, **caractérisé en ce que** les dits films sont rendus adhérents par une opération de pressage.

15. Procédé selon la revendication 14, **caractérisé en ce que** l'opération de pressage s'effectue à chaud après empilement.

16. Procédé selon la revendication 1, **caractérisé en ce que** l'on prépare un empilement de façon à obtenir un générateur multicouche constitué de la succession des films suivants ... collecteur, anode, électrolyte, cathode, collecteur ..., qui sont tous adhérents les uns aux autres ou rendus adhérents.

17. Procédé selon la revendication 16, **caractérisé en ce que** les dits films sont rendus adhérents par une opération de pressage.

18. Procédé selon la revendication 17, **caractérisé en ce que** l'opération de pressage s'effectue à chaud après empilement.

19. Procédé selon la revendication 10, 13 ou 16, **caractérisé en ce que** les dits films sont rendus adhérents en utilisant un électrolyte partiellement réticulé.

20. Procédé selon la revendication 10, 13 ou 16, **caractérisé en ce que** les dits films sont rendus adhérents en utilisant des additifs d'adhésion, réticulables ou non.

21. Procédé selon la revendication 1, **caractérisé en ce que** l'on prépare un empilement de piles bifaces, constitué des films suivants : anode, électrolyte, cathode, collecteur, cathode, électrolyte, anode..., en laissant déborder latéralement les collecteurs de l'anode et de la cathode pour une prise de contact en parallèle et sur lequel on effectue au moins une découpe transversale selon l'étape (b), de façon à permettre les prises de contact en parallèle sur les piles découpées.

22. Procédé selon la revendication 21, **caractérisé en ce que** l'empilement de piles biface est obtenu par enroulement à plat, ou cylindrique, d'une pile élémentaire constituée des films suivants : anode, électrolyte, cathode, collecteur, cathode, électrolyte.

23. Procédé selon la revendication 1, **caractérisé en ce que** l'on prépare un empilement de piles monofaces, constitué des films suivants : ... anode, électrolyte, cathode, collecteur, film isolant..., en laissant déborder latéralement les collecteurs de l'anode et de la cathode pour une prise de contact en parallèle, et sur lequel on effectue au moins une découpe transversale selon l'étape (b), de façon à permettre les prises de contact en parallèle sur les piles découpées.

24. Procédé selon la revendication 23 **caractérisé en ce que** l'empilement de piles monofaces est obtenu par enroulement à plat, ou cylindrique, d'une pile élémentaire constituée des films suivants : anode, électrolyte, cathode, collecteur, film isolant.

25. Procédé selon la revendication 1 **caractérisé en ce que** l'on prépare un empilement de piles monofaces, constitué des films suivants : ... anode, électrolyte, cathode, collecteur, collecteur, cathode, électrolyte, anode..., en laissant déborder latéralement les collecteurs de l'anode et de la cathode pour une prise de contact en parallèle, et sur lequel on effectue au moins une découpe transversale selon l'étape (b), de façon à permettre les prises de contacts en parallèle sur les piles découpées.

26. Procédé selon la revendication 25, **caractérisé en ce que** l'empilement de piles monofaces est obtenu par pliage en zigzag d'une pile élémentaire constituée des films suivants : anode, électrolyte, cathode, collecteur.

27. Procédé selon la revendication 1 **caractérisé en ce que** l'on prépare un empilement de piles bipolaires, constitué des films suivants : ... collecteur , cathode, électrolyte, anode, collecteur ..., avec des collecteurs de courant sur les faces inférieure et supérieure pour la prise de contact, et sur lequel on effectue au moins une découpe selon l'étape (b).

28. Procédé selon la revendication 21, **caractérisé en ce que** l'on découpe également une bordure latérale dudit empilement, de façon à réduire les pertes dues à l'imprécision du positionnement des films et à l'application éventuelle de bandelettes isolantes pour éviter d'éventuels courts-circuits latéraux.

29. Procédé selon la revendication 21 et 28, **caractérisé en ce que** l'on dissout ou enlève mécaniquement une partie du lithium oxydé, de façon à dégager l'extrémité latérale des feuillards de la cathode.

## Claims

1. A method for manufacturing an entirely solid electrochemical generator with lithium comprising the following steps:
(a) a stack of laminated cells is prepared, each consisting of lithium anode or lithium alloy polymeric electrolyte, cathode, collector films and optionally an insulating film, and
(b) the stack obtained in (a) is cut out into a predetermined shape, by using mechanical means, **characterized in that** the stack of laminated cells is prepared under conditions with which a rigid and leakproof single-piece assembly may be formed, wherein the films are all adhering with each other, the operation for cutting out the stack is carried out under conditions according to which no macroscopic deformation of the films forming the single-piece assembly, capable of inducing permanent short circuits or weak points is exerted, and a reactive fluid is introduced, selected from water, liquid nitrogen, liquid argon, alcohol and halogenated copper-containing, sulphur-containing or oxygen-containing compounds capable of oxidizing lithium and of partly dissolving it, so as to avoid any electric short circuit between the end of the anode films and of the conductive films of the cathode.

2. The method according to claim 1, **characterized in that** the cutting-out is carried out by using localized abrasive mechanical means.

3. The method according to claim 1, **characterized in that** the cutting-out is carried out by means of a jet of a fluid, either reactive or not, and if need be including a solid abrasive dispersed in said fluid.

4. The method according to claim 1, **characterized in that that** the cutting-out is carried out by means of a mobile abrasive wire.

5. The method according to claim 1, **characterized in that that** the cutting-out is carried out by transverse cutting-out, by shearing-off or die-cutting.

6. The method according to any of claims, 1, 2, 3, 4 or 5, **characterized in that that** the anode is in lithium or a lithium-based compound or alloy, capable of being oxidized in order to form an electrically insulating film, or of chemically dissolving when it is put in presence of the cathode following an accidental short circuit induced by the cutting-out.

7. The method according to claim 6, **characterized in that** said stack of laminated cells is treated so that the rigid single-piece assembly is sufficiently leakproof in order to prevent penetration of fluid between the layers of the single-piece assembly.

8. The method according to claim 1, **characterized in that** the reactive fluid is introduced during the cutting-out.

9. The method according to claim 1, **characterized in that** the reactive fluid is introduced following the cutting-out.

10. The method according to claim 1, **characterized in that** a stack is prepared so as to obtain a multilayered generator consisting of the succession of the following films: anode, electrolyte, cathode, collector, cathode, electrolyte, anode films..., which all adhere to each other or are made adherent.

11. The method according to claim 10, **characterized in that** said films are made adherent by a pressing operation.

12. The method according to claim 11, **characterized in that** the pressing operation is carried out under hot conditions after stacking.

13. The method according to claim 1, **characterized in that** a stack of cells is prepared so as to obtain a multilayered generator, consisting of a succession of the following films:... anode, electrolyte, cathode, collector, insulator, anode films..., which all adhere to each other or are made adherent.

14. The method according to claim 13, **characterized in that** said films are made adherent by a pressing operation.

15. The method according to claim 14, **characterized in that** the pressing operation is carried out under hot conditions after stacking.

16. The method according to claim 1, **characterized in that** a stack is prepared so as to obtain a multilayered generator, consisting of a succession of the following films..., collector, anode, electrolyte, cathode, collector films..., which all adhere to each other or are made adherent.

17. The method according to claim 16, **characterized in that** said films are made adherent by a pressing operation.

18. The method according to claim 17, **characterized in that** the pressing operation is carried out under hot conditions after stacking.

19. The method according to claim 10, 13 or 16, **characterized in that** said films are made adherent by using a partly cross-linked electrolyte.

20. The method according to claim 10, 13 or 16, **characterized in that** said films are made adherent by using adhesion additives, either cross-linkable or not.

21. The method according to claim 1, **characterized in that** a stack of double-faced cells, consisting of the following films: anode, electrolyte, cathode, collector, cathode, electrolyte, anode films..., by letting the collectors of the anode and of the cathode jut out laterally for a parallel contact point, and on which at least one transverse cutting-out operation is carried out according to step (b), so as to provide parallel contact points on the cut-out cells.

22. The method according to claim 21, **characterized in that** the stack of double-faced cells is obtained by flat or cylindrical winding of an elementary cell consisting of the following films: anode, electrolyte, cathode, collector, cathode, electrolyte films.

23. The method according to claim 1, **characterized in that** a stack of single-faced cells is prepared, consisting of the following films:... anode, electrolyte, cathode, collector, insulating film..., by letting the collectors of the anode and of the cathode jut out laterally for a parallel contact point, and on which at least one transverse cutting-out operation is carried out according to step (b), so as to provide parallel contact points on the cut-out cells.

24. The method according to claim 23, **characterized in that** the stack of single-faced cells is obtained by flat or cylindrical winding of an elementary cell consisting of the following films: anode, electrolyte, cathode, collector, insulating film.

25. The method according to claim 1, **characterized in that** a stack of single-faced cells is prepared, consisting of the following films:... anode, electrolyte, cathode, collector, collector, cathode, electrolyte, anode films..., by letting the collectors of the anode and of the cathode jut out laterally for a parallel contact point, and on which at least one transverse cutting-out operation is carried out according to step (b), so as to provide parallel contact points on the cut-out cells.

26. The method according to claim 25, **characterized in that** the stack of single-faced cells is obtained by zig-zag folding of an elementary cell consisting of the following films: anode, electrolyte, cathode, collector films.

27. The method according to claim 1, **characterized in that** a stack of bipolar cells is prepared, consisting of the following films:... collector, cathode, electrolyte, anode, collector films..., with current collectors on the lower and upper faces for the contact point, and on which at least one cutting-out operation is carried out according to step (b).

28. The method according to claim 21, **characterized in that** a side edge of said stack is also cut out, so as to reduce the losses due to inaccuracy of the positioning of the films and to optional application of insulating strips in order to avoid possible lateral short circuits.

29. The method according to claim 21 and 28, **characterized in that** a portion of the oxidized lithium is dissolved or removed mechanically so as to clear the lateral end of the sheets of the cathode.

## Patentansprüche

1. Verfahren zur Herstellung eines vollkommen stabilen elektrochemischen Lithium-Generators, das die folgenden Schritte umfasst:
a) Vorbereitung eines Stapels gewalzter Zellen, wobei jeder aus Lithium-oder Lithiumlegierungsanoden-, Polymerelektrolyten-, Kathoden-, Kollektorfolien und eventuell einer Isolationsfolie besteht, und
b) Schneiden des bei (a) erhaltenen Stapels in vorbestimmter Form mit mechanischen Mitteln, **dadurch gekennzeichnet, dass** der Stapel gewalzter Zellen unter Bedingungen hergestellt wird, die es erlauben, eine feste und dichte Einblock-Gruppe zu bilden, in der die Folien alle untereinander haften, wobei der Vorgang des Schneidens des Stapels unter Bedingungen erfolgt, bei denen auf die Folien, die die Einblock-Gruppe bilden, keine makroskopische Verformung ausgeübt wird, die ständige Kurzschlüsse oder Schwachpunkt induzieren könnte, und Zuführung eines reaktiven Fluids, das aus dem Wasser, dem flüssigen Stickstoff, dem flüssigen Argon, dem Alkohol und den Halogen-, Schwefel- oder Sauerstoffverbindungen ausgewählt ist, die imstande sind, das Lithium zu oxidieren und es teilweise aufzulösen, um jedweden elektrischen Kurzschluss zwischen dem Ende der Anodenfolien und der leitenden Folien der Kathode zu verhindern.

2. Verfahren nach Anspruch 1, **dadurch gekennzeichnet, dass** das Schneiden bei Verwendung lokalisierter mechanischer Schleifmittels durchgeführt wird.

3. Verfahren nach Anspruch 1, **dadurch gekennzeichnet, dass** das Schneiden mittels eines Fluidstrahls, der reaktiv ist oder nicht, durchgeführt wird, der im Bedarfsfall ein in dem Fluid verteiltes festes Schleifmittel umfasst.

4. Verfahren nach Anspruch 1, **dadurch gekennzeichnet, dass** das Schneiden mittels einer bewegbaren Schleifschnur erfolgt.

5. Verfahren nach Anspruch 1, **dadurch gekennzeichnet, dass** das Schneiden durch transversales Schneiden, durch Scheren oder Stanzen erfolgt.

6. Verfahren nach einem der Ansprüche 1, 2, 3, 4 oder 5, **dadurch gekennzeichnet, dass** die Anode aus Lithium oder einer Verbindung oder Legierung auf Lithiumbasis ist, die imstande ist, derart zu oxidieren, dass eine elektrisch isolierende Folie gebildet wird, oder sich beim Zusammentreffen mit der Kathode infolge eines zufälligen, durch das Schneiden hervorgerufenen Kurzschlusses chemisch aufzulösen.

7. Verfahren nach Anspruch 6, **dadurch gekennzeichnet, dass** der Stapel gewalzter Zellen derart behandelt wird, dass die feste Einblock-Gruppe dicht genug ist, um das Eindringen von Fluid zwischen die Schichten der Einblock-Gruppe zu verhindern.

8. Verfahren nach Anspruch 1, **dadurch gekennzeichnet, dass** das reaktive Fluid beim Scheiden zugeführt wird.

9. Verfahren nach Anspruch 1, **dadurch gekennzeichnet, dass** das reaktive Fluid nach dem Schneiden zugeführt wird.

10. Verfahren nach Anspruch 1, **dadurch gekennzeichnet, dass** ein Stapel derart hergestellt wird, dass man einen Mehrschicht-Generator erhält, der aus der Abfolge der folgenden Folien besteht: Anode, Elektrolyt, Kathode, Kollektor, Kathode, Elektrolyt, Anode ..., die alle aneinander haften oder haftend gemacht wurden.

11. Verfahren nach Anspruch 10, **dadurch gekennzeichnet, dass** die Folien durch einen Pressvorgang haftend gemacht werden.

12. Verfahren nach Anspruch 11, **dadurch gekennzeichnet, dass** der Pressvorgang nach dem Stapeln warm erfolgt.

13. Verfahren nach Anspruch 1, **dadurch gekennzeichnet, dass** ein Zellenstapel derart hergestellt wird, dass man einen Mehrschicht-Generator erhält, der aus der Abfolge der folgenden Folien besteht: ... Anode, Elektrolyt, Kathode, Kollektor, Isolator, Anode ..., die alle aneinander haften oder haftend gemacht wurden.

14. Verfahren nach Anspruch 13, **dadurch gekennzeichnet, dass** die Folien durch einen Pressvorgang haftend gemacht werden.

15. Verfahren nach Anspruch 14, **dadurch gekennzeichnet, dass** der Pressvorgang nach dem Stapeln warm erfolgt.

16. Verfahren nach Anspruch 1, **dadurch gekennzeichnet, dass** ein Stapel derart hergestellt wird, dass man einen Mehrschicht-Generator erhält, der aus der Abfolge der folgenden Folien besteht: ... , Kollektor, Anode, Elektrolyt, Kathode, Kollektor ..., die alle aneinander haften oder haftend gemacht wurden.

17. Verfahren nach Anspruch 16, **dadurch gekennzeichnet, dass** die Folien durch einen Pressvorgang haftend gemacht werden.

18. Verfahren nach Anspruch 17, **dadurch gekennzeichnet, dass** der Pressvorgang nach dem Stapeln warm erfolgt.

19. Verfahren nach Anspruch 10, 13 oder 16, **dadurch gekennzeichnet, dass** die Folien durch Verwendung eines teilweise retikulierten Elektrolyten haftend gemacht werden.

20. Verfahren nach Anspruch 10, 13 oder 16, **dadurch gekennzeichnet, dass** die Folien durch Verwendung von Haftzusätzen, die retikulierbar sind oder nicht, haftend gemacht werden.

21. Verfahren nach Anspruch 1, **dadurch gekennzeichnet, dass** ein Stapel zweiseitiger Zellen hergestellt wird, der aus den folgenden Folien besteht: Anode, Elektrolyt, Kathode, Kollektor, Kathode, Elektrolyt, Anode ..., indem man die Kollektoren der Anode und der Kathode für eine parallele Kontaktaufnahme seitlich überstehen lässt, und bei dem mindestens ein transversaler Schnitt gemäß Schritt (b) derart durchgeführt wird, dass die parallelen Kontaktaufnahmen über die geschnittenen Zellen gestattet werden.

22. Verfahren nach Anspruch 21, **dadurch gekennzeichnet, dass** der Stapel zweiseitiger Zellen durch flaches oder zylindrisches Rollen einer elementaren Zelle hergestellt wird, die aus den folgenden Folien besteht: Anode, Elektrolyt, Kathode, Kollektor, Kathode, Elektrolyt.

23. Verfahren nach Anspruch 1, **dadurch gekennzeichnet, dass** ein Stapel einseitiger Zellen hergestellt wird, der aus den folgenden Folien besteht: ... Anode, Elektrolyt, Kathode, Kollektor, Isolationsfolie ..., indem man die Kollektoren der Anode und der Kathode für eine parallele Kontaktaufnahme seitlich überstehen lässt, und bei dem mindestens ein transversaler Schnitt gemäß Schritt (b) derart durchgeführt wird, dass die parallelen Kontaktaufnahmen über die geschnittenen Zellen gestattet werden.

24. Verfahren nach Anspruch 23, **dadurch gekennzeichnet, dass** der Stapel einseitiger Zellen durch flaches oder zylindrisches Rollen einer elementaren Zelle hergestellt wird, die aus den folgenden Folien besteht: Anode, Elektrolyt, Kathode, Kollektor, Isolationsfolie.

25. Verfahren nach Anspruch 1, **dadurch gekennzeichnet, dass** ein Stapel einseitiger Zellen hergestellt wird, der aus den folgenden Folien besteht: ... Anode, Elektrolyt, Kathode, Kollektor, Kollektor, Kathode, Elektrolyt, Anode ..., indem man die Kollektoren der Anode und der Kathode für eine parallele Kontaktaufnahme seitlich überstehen lässt, und bei dem mindestens ein transversaler Schnitt gemäß Schritt (b) derart durchgeführt wird, dass die parallelen Kontaktaufnahmen über die geschnittenen Zellen gestattet werden.

26. Verfahren nach Anspruch 25, **dadurch gekennzeichnet, dass** der Stapel einseitiger Zellen durch Zickzackfalten einer elementaren Zelle hergestellt wird, die aus den folgenden Folien besteht: Anode, Elektrolyt, Kathode, Kollektor.

27. Verfahren nach Anspruch 1, **dadurch gekennzeichnet, dass** ein Stapel bipolarer Zellen hergestellt wird, der aus den folgenden Folien besteht: ... Kollektor, Kathode, Elektrolyt, Anode, Kollektor ... mit Stromabnehmern auf der unteren und oberen Seite für die Kontaktaufnahme, und bei dem mindestens ein transversaler Schnitt gemäß Schritt (b) durchgeführt wird.

28. Verfahren nach Anspruch 21, **dadurch gekennzeichnet, dass** ebenfalls ein seitlicher Rand des Stapels derart geschnitten wird, um Verluste zu reduzieren, die auf die ungenaue Positionierung der Folien und auf die eventuelle Anwendung von Isolationsbändern zur Vermeidung eventueller seitlicher Kurzschlüsse zurückzuführen sind.

29. Verfahren nach Anspruch 21 und 28, **dadurch gekennzeichnet, dass** ein Teil des oxidierten Lithiums gelöst oder mechanisch derart entfernt wird, um das seitliche Ende der Bänder der Kathode freizulegen.
